# FASCICULE DE BREVET EUROPEEN

(11) **EP 0 741 151 B1**
(45) Date de publication et mention de la délivrance du brevet: **09.09.1998**
(21) Numéro de dépôt: 96400915.3
(22) Date de dépôt: 29.04.1996
(51) Int. Cl.: C08F 255/00, C08F 279/02, C08F 277/00, C08L 43/04

(54) **Procédé de préparation d'une composition paraffine/polymère greffé**
Verfahren zur Herstellung einer Zusammensetzung von Paraffin und einem Pfropfpolymer
Process for the preparation of a paraffin graft polymer composition

(30) Priorité: 03.05.1995 FR 9505267
(43) Date de publication de la demande: 06.11.1996
(73) Titulaire: TOTAL RAFFINAGE DISTRIBUTION S.A., 92800 Puteaux (FR)
(72) Inventeur: Lemoine, Guy, 76600 Le Havre (FR); Buisson, Jean-François, 76600 Le Havre (FR)
(74) Mandataire: Jolly, Jean-Pierre

(56) Documents cités:
- WO-A-91/08240
- WO-A-91/08262
- DATABASE WPI Section Ch, Week 9324 Derwent Publications Ltd., London, GB; Class A97, AN 93-191768 XP002011466 & JP-A-05 117 638 ( MITSUBISHI CABLE IND LTD) , 14 Mai 1993
- DATABASE WPI Section Ch, Week 9016 Derwent Publications Ltd., London, GB; Class A17, AN 90-118740 XP002011467 & JP-A-02 067 339 ( SHOWA ELEC WIRE KK) , 7 Mars 1990

## Description

La présente invention concerne un procédé de préparation d'une composition paraffine/polymère greffé et des applications de cette composition.

Il est connu que les paraffines sont des mélanges d'hydrocarbures saturés pouvant être produits, notamment, à partir du pétrole brut, par distillation de celui-ci, extraction des composés aromatiques et déparaffinage aux solvants des différentes coupes issues de la (ou les) distillation (s). Ces mélanges peuvent également être des paraffines de synthèse, de type Fischer Tropsch par exemple.

Les domaines d'application les plus courants pour les paraffines sont, notamment, les revêtements de surfaces, l'enduction de papier ou de carton et la fabrication de bougies. La paraffine seule ne peut répondre à toutes les exigences du point de vue rhéologique. En effet, au delà de son point de fusion, la paraffine à l'état liquide présente une trop faible viscosité, ce qui contribue à une mauvaise tenue en température et se traduit par des phénomènes de coulure, de suintement ou de décollement.

Pour pallier cet inconvénient, la technique enseigne très couramment d'ajouter des dopes à la paraffine, ces dopes pouvant être en particulier des polymères. On peut citer à ce sujet la demande de brevets WO 89/11514, ainsi que les brevets GB 2 197 326, JP 055003429 et JP 5117638.

On sait que, après réaction radicalaire avec, par exemple, des peroxydes, les oléfines à hydrogènes mobiles perdent leurs hydrogènes, créant ainsi des sites actifs sur lesquels peuvent venir se greffer des composés. En particulier, dans les documents cités ci-dessus, les techniques présentées sont similaires et préconisent toutes l'emploi de polymères greffés par du silane, qui sont ensuite mélangés à la paraffine. Les polymères utilisés peuvent être, par exemple, des polyéthylènes ou des copolymères éthylène-acétate de vinyle, ou encore des mélanges de copolymères éthylène-propylène. Ces systèmes confèrent aux mélanges obtenus de bonnes propriétés rhéologiques et améliorent de plus l'adhésivité, la résistance aux solvants, les propriétés mécaniques telles que, en particulier, la résistance à la traction et à l'abrasion, ainsi que des propriétés isolantes. L'incorporation à la paraffine de polymère greffé par du silane nécessite des températures élevées et parfaitement contrôlées pendant des temps relativement longs. Le mélange ainsi obtenu présente une viscosité élevée, qui n'est pas toujours compatible avec les procédés de mise en oeuvre.

On sait que les mélanges de paraffine et de polymère greffé avec du silane peuvent réticuler lentement dans le temps, en présence d'humidité. Cependant, cette réticulation peut nécessiter des temps très longs ou peut être incomplète lorsqu'on travaille sur des épaisseurs importantes; aussi, la mise en forme finale du produit peut se révéler difficile, voire impossible, en particulier à cause de l'absence d'homogénéité.

En outre, l'opération de réticulation peut aussi conduire à un mélange biphasique, par suite d'une réaction du polymère greffé sur lui-même, sans piégeage de la paraffine.

Pour remédier à ces inconvénients, la présente invention vise à obtenir, dans des délais très courts de réticulation contrôlée, homogène et complète, des produits réticulés fluides, homogènes, stables et faciles à mettre en oeuvre, en réalisant une émulsion aqueuse paraffine/polymère réticulé. Le mélange paraffine/polymère présente, avant réticulation du polymère, une faible viscosité, ce qui facilite sa mise en émulsion.

Comme on le verra ci-après, le mode de réticulation selon l'invention est fondamentalement différent de celui de la technique antérieure, puisque la réticulation s'effectue ici de manière contrôlée, lors de la mise en émulsion du mélange paraffine/polymère greffé. Le système de réticulation du silane conduit à un réseau de structure tridimensionnelle, permettant d'obtenir, après rupture de l'émulsion, un produit final possédant des valeurs élevées de viscosité et d'élasticité, et présentant l'aspect d'un gel.

A cet effet, l'invention a pour premier objet un procédé de préparation d'une composition paraffine/polymère greffé, caractérisé en ce qu'il comprend les étapes suivantes :
a) la réalisation d'un mélange à partir :
   * d'au moins une paraffine de point de fusion compris entre 50 et 120 °C,
   * d'au moins un polymère présentant des chaînes hydrocarbonées à hydrogène mobile,
   * d'au moins un composé organique du silicium pouvant se greffer sur ledit polymère grâce à un initiateur de greffage, et
   * d'un initiateur de greffage ;
   ce mélange étant effectué à une température telle que la paraffine soit à l'état fondu, et de façon à obtenir un polymère greffé ;
b) la réalisation d'une émulsion aqueuse du mélange obtenu en a), à une température telle que le mélange réalisé en a) reste à l'état fondu, de façon à faire réticuler le polymère greffé au sein de l'émulsion aqueuse;
c) la rupture de l'émulsion obtenue en b).

Au sens de la présente invention, la paraffine utilisable dans l'émulsion paraffine/polymère greffé peut être une paraffine issue du pétrole brut ou une paraffine de synthèse. Dans tous les cas, il s'agira de chaînes aliphatiques possédant un nombre d'atomes de carbone compris entre 20 et 100, un point de fusion compris entre 50 et 120 °C et un poids moléculaire compris entre 250 et 1500. La paraffine est de structure cristalline et peut être un mélange de n-, iso- et cyclo-paraffines.

Les paraffines d'origine pétrolière peuvent être par exemple issues des coupes de distillation sous vide d'un pétrole brut. Après extraction des composés aromatiques, elles sont séparées des bases lubrifiantes par des procédés tels que le déparaffinage aux solvants. Après fusion et cristallisation des gatschs ainsi obtenus, des procédés particuliers de raffinage tels que, par exemple, l'hydroraffinage, confèrent aux paraffines les propriétés requises pour différentes applications. Les gammes de paraffines les plus couramment utilisées sont les paraffines classées 52/54, 58/60 ou 62/64, ces valeurs correspondant à leur point de fusion.

Les paraffines de synthèse peuvent être par exemple de type Fischer Tropsch, c'est-à-dire obtenues par oxydation du charbon ou du gaz naturel, puis réaction de Fischer-Tropsch. Ces paraffines de synthèse possèdent un poids moléculaire d'environ 1500 et un point de fusion généralement plus élevé que les paraffines d'origine pétrolière.

Le polymère utilisable pour la mise en oeuvre de l'invention est un polymère ayant une bonne compatibilité avec la paraffine et il peut être choisi dans le groupe constitué par :
- les polyoléfines telles que le polyéthylène basse ou moyenne densité ou linéaire, le polypropylène etc... ou les copolymères d'oléfines,
- les élastomères synthétiques comme :
   . l'EPDM (éthylène-propylène-diène monomère),
   . l'EPM (éthylène-propylène monomère),
   . le polyisobutylène (caoutchouc butyle),
   . le polybutadiène,
   . le polyisoprène,
   . le polynorbornène,
- le copolymère éthylène-acétate de vinyle.

La Demanderesse a ainsi utilisé avec succès un polyéthylène de masse moléculaire en poids comprise entre 10 000 et 500 000, ainsi que du polynorbornène de masse moléculaire en poids voisine de 2 000 000.

La teneur du mélange en polymère est fonction de sa nature et des qualités requises par les utilisations particulières envisagées pour le produit final obtenu par le procédé selon l'invention.

La Demanderesse a établi que, dans le procédé selon l'invention, le polymère sur lequel est greffé un composé organique du silicium par l'intermédiaire d'un agent de greffage est ensuite réticulé par hydrolyse dudit composé.

Le composé organique du silicium, qui sera appelé ci-après par simplification silane, bien qu'il puisse contenir des atomes autres que le silicium et l'hydrogène, des atomes d'oxygène par exemple, est connu pour sa capacité à se greffer aisément sur les polymères.

L'agent qui permet le greffage du composé organique du silicium sur le polymère peut être un peroxyde choisi parmi les composés suivants: le peroxyde de 1,1 bis (t-butyl) 3,3,5-triméthylcyclohexane, le peroxyde de di 2,4-dichlorobenzoyle, le peroxyde de benzoyle, le valérate de 1,1-bis-(t-butylperoxy), le peroxyde de dicumyle, le peroxyde de t-butylcumyle, le bis-(2-t-butylperoxy isopropyl) benzène, le 2,5-diméthyl 2,5-di(t-butylperoxy) hexane, le peroxyde de bis-(t-butyl) et le 2,5-diméthyl 2,5-bis(t-butylperoxy)hexyne-3. La Demanderesse a ainsi utilisé avec succès le peroxyde de 1,1 bis (t-butyl) 3,3,5-triméthylcyclohexane mis en solution dans un plastifiant pour faciliter son incorporation au mélange.

Le silane utilisé dans la présente invention est choisi en fonction de sa masse moléculaire et de sa température d'ébullition. On pourra utiliser, par exemple, un chlorosilane tel que le trichlorosilane, le vinyltrichlorosilane, le méthyltrichlorosilane, le méthyldichlorosilane, le diméthyldichlorosilane ou le méthylvinydichlorosilane; un ester d'organosilane, tel que le méthyltriéthoxysilane ou le méthyltriméthoxysilane, le vinyltriméthoxysilane ou le vinyltriéthoxysilane, le vinyl-tris (2-méthoxyéthoxy) silane, le vinyltriacétoxysilane ou les mercaptosilanes. Parmi ces composés, le vinyltriéthoxysilane se révèle particulièrement intéressant, compte tenu de sa température d'ébullition supérieure à 150 ° C.

Cette température est en effet importante, car la première étape du procédé de préparation de l'émulsion paraffine/polymère selon l'invention consiste à mélanger le polymère et la paraffine à une température qui doit être supérieure au point de fusion de la paraffine et inférieure à son point éclair. Cette première étape pourra donc être réalisée entre 50 et 210° C, dans une enceinte de mélange dynamique avec rotor, pendant une durée qui peut être de 1 à 3 heures, pour obtenir une dispersion homogène du polymère dans la paraffine.

Ensuite, le composé organique du silicium et l'initiateur de greffage sont incorporés simultanément ou successivement dans le mélange fondu de paraffine et de polymère, que l'on maintient sous agitation pendant une durée suffisante pour obtenir un greffage du composé silanisé sur les chaînes polymères par l'intermédiaire de l'initiateur.

La deuxième étape du procédé selon l'invention est la mise en émulsion aqueuse du mélange paraffine/polymère greffé. Elle nécessite tout d'abord l'utilisation d'un émulsifiant classique : cationique, anionique, amphotère ou non ionique, ou d'un mélange d'un ou plusieurs de ces émulsifiants.

Une gamme d'émulsifiants préférée comprend les alcools gras polyéthoxylés, que la Demanderesse a choisi d'utiliser sous forme d'alcools céto-stéaryliques éthoxylés en mélange avec du monostéarate de sorbitan.

Cette deuxième étape nécessite également l'incorporation d'eau ou d'une solution aqueuse dans le mélange paraffine/polymère greffé sous agitation et à une température inférieure à 100°C, mais telle que le mélange reste à l'état fondu dans le réacteur apte à produire une émulsion.

La préparation de l'émulsion selon l'invention peut également être effectuée dans une émulsionneuse sous pression ou à pression atmosphérique.

La deuxième étape du procédé selon l'invention conduit à la formation d'une émulsion, dans laquelle s'effectue la réticulation du polymère . Ainsi, une caractéristique importante de l'invention est de faire réticuler le polymère greffé in situ dans la paraffine.

L'émulsion obtenue par le procédé selon l'invention peut comprendre de préférence :
a) de 5 à 60 % en poids de paraffine,
b) de 0,5 à 10 % en poids de polymère greffé et réticulé, le polymère pouvant contenir jusqu'à 8 % en poids de composé organique du silicium,
c) de 40 à 95 % en poids d'eau,
d) de 1 à 10 % en poids d'agent émulsifiant.

On peut ajouter à l'émulsion, si besoin est, un ajusteur de pH tel qu'un acide ou une base minérale ou organique.

D'autres additifs tels que des agents gélifiants du type kaolin, bentonite ou tout autre additif connu pour ses propriétés thixotropiques, peuvent être ajoutés pour maintenir la stabilité de l'émulsion.

La cinétique de réticulation peut être accélérée par incorporation de catalyseurs du type dilaurate de dibutyl étain.

La dernière étape du procédé selon l'invention consiste à rompre l'émulsion formée dans la deuxième étape, de manière à ce que la composition paraffine/polymère greffé préparée selon l'invention puisse être utilisée.

Les applications de la composition ainsi obtenue constituent un autre objet de la présente invention.

Selon les applications choisies, on utilisera l'émulsion telle quelle et sa rupture se produira ensuite, ou alors on rompra l'émulsion avant de l'utiliser. La rupture de l'émulsion peut se produire soit naturellement, par évaporation de l'eau à la température ambiante, soit par chauffage. Si, pour des applications spécifiques, une rupture contrôlée rapide est souhaitée, on pourra utiliser un émulsifiant classique approprié, du type anionique ou cationique.

Dans certains cas, il peut être nécessaire de moduler la cinétique d'évaporation de l'eau. Pour ce faire, on utilise des techniques connues, telles que l'incorporation dans l'émulsion de solvants légers, pour diminuer la vitesse d'évaporation et éviter la formation de cloques.

Les compositions paraffine/polymère greffé obtenues par évaporation de l'eau à partir des émulsions conformes à l'invention présentent une viscosité pouvant atteindre 1000 mPa, voire une viscosité tellement élevée que sa mesure ne soit plus réalisable. L'apparence de l'émulsion est dans tous les cas celle d'un gel, alors qu'avant la mise en émulsion, les compositions paraffine/polymère greffé présentent une viscosité très inférieure (de l'ordre de 30 mPa). Elles ont en outre une tenue très satisfaisante à haute température, jusqu'à environ 130 °C.

Compte tenu de leur viscosité élevée, les produits obtenus présentent une bonne résistance mécanique, une bonne tenue aux solvants et à la température. Ils présentent également, à hautes températures, des propriétés anti-feu et des propriétés de glissance.

Les compositions obtenues selon l'invention conviennent pour toutes les applications usuelles des paraffines : en particulier, comme bougie, revêtement de support (imperméabilisation), enduction de papier ou de carton, remplissage de fibres optiques (piégeage d'eau introduite accidentellement), trempage ou encore microencapsulation.

On peut également les utiliser comme tampon thermique, c'est-à-dire comme système permettant le stockage et la restitution d'énergie en utilisant les chaleurs latentes de changement de phase. De cette manière, la paraffine, qui correspond à une phase dispersée, reste maintenue dans le réseau quel que soit son état physique variant avec la température. Les propriétés de l'émulsion conduisent à un produit réversible monophasique pouvant subir une succession de changements de phases.

Les exemples suivants, qui n'ont aucun caractère limitatif, illustrent l'invention.

### EXEMPLE 1

Cet exemple concerne la préparation d'une composition C₁ paraffine-polymère greffé par le procédé selon l'invention.

On prépare d'abord un mélange M₁ à partir de :
1) 440 g de paraffine d'origine pétrolière, ayant les caractéristiques suivantes :
   - point de fusion : compris entre 52 à 54°C,
   - nombre moyen d'atomes de carbone : 25 environ,
   - masse moléculaire moyenne : 350 environ.
2) 60 g de polyéthylène basse densité, commercialisé sous le nom de Lacqtène 1003 FN22, sous forme de granulés, ayant les caractéristiques suivantes :
   - indice d'écoulement (mesuré selon la norme ASTM-D-1231) : 0,25 g pendant 10 minutes sous 2,16 kg,
   - densité : 0,922,
   - masse moléculaire en poids : de l'ordre de 60 000.

La paraffine (88% en poids) et le polyéthylène (12% en poids) sont mélangés à 120°C pendant 1h30, durée au bout de laquelle on obtient un mélange homogène. On incorpore alors, comme silane, 20 g de vinyltriéthoxysilane (4% en poids) et, comme initiateur de greffage, 2,5 g de peroxyde de 1,1-bis (t-butyl) 3,3,5- triméthylcyclohexane dilué dans 50% de plastifiant (référence Trigonox 29B50).

Le mélange M₂ ainsi obtenu est maintenu pendant 30 minutes à 140°C pour permettre le greffage du silane sur le polymère. Il est ensuite utilisé comme solution mère, dont 300 g sont mélangés à 200 g de paraffine identique à celle utilisée en 1).

Le nouveau mélange M₃ obtenu contient environ 7% en poids de polyéthylène greffé.

On prépare ensuite, à 120°C, une solution émulsifiante SE, à partir de :
- 10 g d'alcool céto-stéarylique éthoxylé (référence Mergital CS9),
- 2,5 g d'alcool céto-stéarylique éthoxylé (référence Mergital CS25),
- 16 g de monostéarate de sorbitan (référence Span 60) et l'on incorpore cette solution SE au mélange M₃, en vue de réaliser une émulsion E₁.

Cette émulsion E₁ est obtenue en maintenant sous agitation vers 110 °C la solution obtenue (mélange de M₃ et de SE) et en versant lentement de l'eau jusqu'à inversion de phase continue visible à l'oeil. Dès que cette inversion se produit, on ajoute encore de l'eau, jusqu'à obtenir, dans le mélange final, à peu près autant d'eau que de M₃ additionné de SE.

On évapore ensuite l'eau de l'émulsion sur une plaque, de façon à obtenir une composition C₁ sous forme d'un revêtement de 2 mm d'épaisseur. On mesure la viscosité dynamique de cette composition C₁ et on la compare à la viscosité du mélange M₃ additionné de SE avant la mise en émulsion.

La viscosité est mesurée selon la norme NF 60 100.

On mesure le taux de gel de la composition C₁ selon la norme ASTMD 2765-68.

Les résultats obtenus figurent dans le Tableau I ci-après.

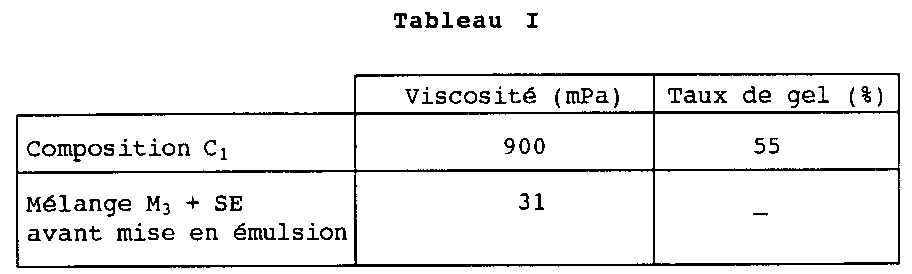

Les résultats du Tableau I montrent, d'une part, que la composition C₁ obtenue par le procédé selon l'invention présente une viscosité beaucoup plus élevée que celle du mélange (M₃ + SE) avant mise en émulsion et, d'autre part, que la composition C₁ a bien la consistance d'un gel, en raison de la réticulation du polyéthylène.

### EXEMPLE 2

Cet exemple concerne la préparation d'une composition C₂ paraffine-polymère par le procédé selon l'invention.

On prépare d'abord une composition C₂ à partir de :
1) 425 g de paraffine d'origine pétrolière, ayant les caractéristiques suivantes :
   - point de fusion : compris entre 62 à 64°C,
   - nombre moyen d'atomes de carbone : 35 environ,
   - masse moléculaire moyenne : 500 environ.
2) 75 g de polyéthylène haute densité, type Ziegler-Natta, commercialisé sous forme de granulés par SOLVAY sous le nom de Eltex A3180 et ayant les caractéristiques suivantes :
   - indice d'écoulement : 0,25 g pendant 10 minutes sous 2,16 kg,
   - masse moléculaire en poids : 100 000 environ.

La paraffine (85% en poids) et le polyéthylène (15% en poids) sont mélangés à 140°C pendant 1h30, durée au bout de laquelle on obtient un mélange homogène. On incorpore alors, comme silane, 20 g de vinyltriméthoxysilane et, comme initiateur de greffage, 2,5 g de peroxyde de 1,1-bis (t-butyl) 3,3,5- triméthylcyclohexane dilué dans 50% de plastifiant (référence Trigonox 29B50).

Le mélange est maintenu pendant 30 minutes à 140°C pour permettre le greffage du silane sur le polymère. La composition C₂ ainsi obtenue est ensuite utilisée comme solution mère, dont 300 g sont mélangés à 200 g de paraffine identique à celle utilisée en 1). On obtient ainsi une composition C'₂ contenant environ 8,5% en poids de polyéthylène greffé.

On prépare ensuite, à 120°C, une solution émulsifiante SE, en mélangeant :
- 10 g d'alcool céto-stéarylique éthoxylé (référence Mergital CS9),
- 2,5 g d'alcool céto-stéarylique éthoxylé (référence Mergital CS25),
- 16 g de monostéarate de sorbitan (référence Span 60), et l'on incorpore ensuite cette solution à C'₂.

On prépare enfin une émulsion E₂ selon l'invention, en maintenant sous agitation vers 110 °C la solution obtenue (mélange de SE et de C'₂) et en versant lentement de l'eau jusqu'à inversion de phase continue visible à l'oeil. Dès que cette inversion se produit, on ajoute de l'eau jusqu'à obtenir dans le mélange final à peu près autant d'eau que de C'₂ additionnée de SE.

On évapore ensuite l'eau de l'émulsion sur une plaque, de façon à obtenir un revêtement de 2 mm d'épaisseur. On mesure la viscosité dynamique de l'émulsion ainsi obtenue et on la compare à la viscosité de la composition C'₂ avant la mise en émulsion.

La viscosité est mesurée selon la norme NF 60 100.

On mesure le taux de gel de l'émulsion selon la norme ASTMD 2765-68.

Les résultats obtenus figurent dans le Tableau II ci-après.

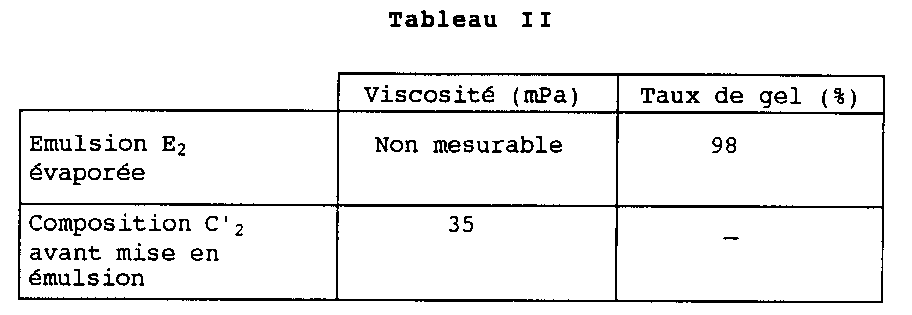

Les résultats du Tableau II montrent, d'une part, que l'émulsion E₂ obtenue selon l'invention présente une viscosité beaucoup plus élevée que celle de la composition avant mise en émulsion et tellement élevée qu'il est impossible de la chiffrer, et, d'autre part, que l'émulsion a bien la consistance d'un gel, en raison de la réticulation du polyéthylène.

### EXEMPLE 3

Cet exemple concerne la préparation d'une émulsion E₃ paraffine-polymère selon l'invention.

On prépare d'abord une composition C₃ à partir de :
1) 485 g de paraffine de synthèse, ayant les caractéristiques suivantes :
   - point de fusion : compris entre 68 à 70°C,
   - nombre moyen d'atomes de carbone : 40 environ,
   - masse moléculaire moyenne : 550 environ.
2) 15 g de polynorbornène, commercialisé par ATO sous forme de poudre sous la référence Norsorex N et ayant une masse moléculaire en poids de 2 000 000 environ.

La paraffine (97% en poids) et le polynorbornène (3% en poids) sont mélangés à 140°C pendant 1h30, durée au bout de laquelle on obtient un mélange homogène. On incorpore alors, comme silane, 20 g de méthyltriéthoxysilane et, comme initiateur de greffage, 2,5 g de peroxyde de 1,1-bis (t-butyl) 3,3,5- triméthylcyclohexane dilué dans 50% de plastifiant (référence Trigonox 29B50).

Le mélange est poursuivi pendant 30 minutes à 140°C pour permettre le greffage du silane sur le polymère. On obtient ainsi une composition C₃ contenant environ 3% en poids de polynorbornène greffé.

On prépare ensuite à 120°C une solution émulsifiante SE en mélangeant :
- 10 g d'alcool céto-stéarylique éthoxylé (référence Mergital CS9),
- 2,5 g d'alcool céto-stéarylique éthoxylé (référence Mergital CS25),
- 16 g de monostéarate de sorbitan (référence Span 60), et on incorpore ensuite cette solution émulsifiante à C₃.

On prépare enfin l'émulsion E₃ selon l'invention en maintenant sous agitation vers 110 °C la solution obtenue (mélange de C₃ et de SE), puis on verse lentement de l'eau jusqu'à inversion de phase continue visible à l'oeil. Dès que l'inversion se produit, on ajoute un complément d'eau de manière à obtenir dans le mélange final à peu près autant d'eau que de C₃ additionné de SE.

On évapore ensuite l'eau de l'émulsion sur une plaque, de façon à obtenir un revêtement de 2 mm d'épaisseur. On mesure la viscosité dynamique de l'émulsion ainsi obtenue et on la compare à la viscosité de la composition C₃ avant la mise en émulsion.

La viscosité est mesurée selon la norme NF 60 100.

On mesure le taux de gel de l'émulsion selon la norme ASTMD 2765-68.

Les résultats obtenus figurent dans le Tableau III ci-après :

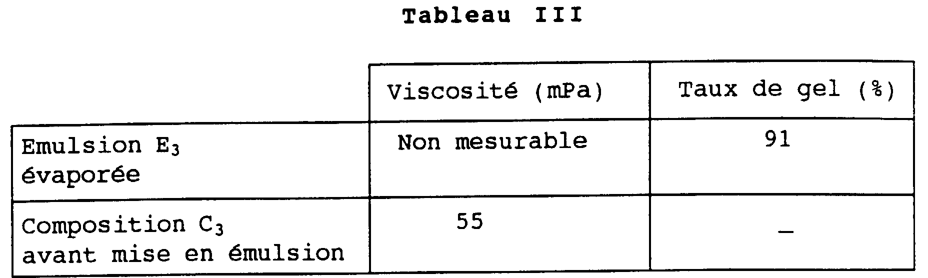

Les résultats du Tableau III montrent, d'une part, que l'émulsion E₃ obtenue selon l'invention présente une viscosité beaucoup plus élevée que celle de la composition avant mise en émulsion et tellement élevée qu'il est impossible de la mesurer, et, d'autre part, que l'émulsion a bien la consistance d'un gel, en raison de la réticulation du polynorbornène.

### EXEMPLE 4

Cet exemple concerne la préparation d'une émulsion E4 paraffine-polymère selon l'invention.

On prépare d'abord une composition C₄ à partir de:
1) 460 g de paraffine de synthèse de type Fischer-Tropsch ayant les caractéristiques suivantes :
   - point de fusion : environ 98°C,
   - nombre moyen d'atomes de carbone : 90 environ,
   - masse moléculaire moyenne : 1400 environ.
2) 40 g de polyéthylène basse densité, commercialisé sous forme de granulés sous l'appellation de Lacqtène 1003 FN22 et ayant les caractéristiques suivantes :
   - indice d'écoulement : 0,25 g pendant 10 minutes sous 2,16 kg,
   - densité : 0,922,
   - masse moléculaire en poids : de l'ordre de 60 000.

La paraffine (92% en poids) et le polyéthylène (8% en poids) sont mélangés à 120°C pendant 1h30, durée au bout de laquelle on obtient un mélange homogène. On incorpore alors, comme silane, 20 g de vinyltriéthoxysilane (4% en poids) et, comme initiateur de greffage, 2,5 g de peroxyde de 1,1-bis (t-butyl) 3,3,5- triméthylcyclohexane dilué dans 50% de plastifiant (référence Trigonox 29B50).

Le mélange est maintenu pendant 30 minutes à 140 °C pour permettre le greffage du silane sur le polymère. La composition C₄ ainsi obtenue contient environ 7,5 % en poids de polyéthylène greffé.

On prépare ensuite à 120°C une solution émulsifiante SE, en mélangeant :
- 10 g d'alcool céto-stéarylique éthoxylé (référence Mergital CS9),
- 2,5 g d'alcool céto-stéarylique éthoxylé (référence Mergital CS25),
- 16 g de monostéarate de sorbitan (référence Span 60), et on incorpore ensuite cette solution à C₄.

On prépare enfin l'émulsion E₄ selon l'invention en maintenant sous agitation vers 110 °C la solution obtenue (mélange de C₄ et de SE) puis on verse lentement de l'eau jusqu'à inversion de phase continue visible à l'oeil. Dès que cette inversion se produit, on ajoute de l'eau de manière à obtenir dans le mélange final à peu près autant d'eau que de C₄ additionné de SE.

On évapore ensuite l'eau de l'émulsion sur une plaque, de façon à obtenir un revêtement de 2 mm d'épaisseur. On mesure la viscosité dynamique de l'émulsion ainsi obtenue et on la compare à la viscosité de la composition C4 avant la mise en émulsion.

La viscosité est mesurée selon la norme NF 60 100.

On mesure le taux de gel de l'émulsion selon la norme ASTMD 2765-68.

Les résultats obtenus figurent dans le Tableau IV ci-après.

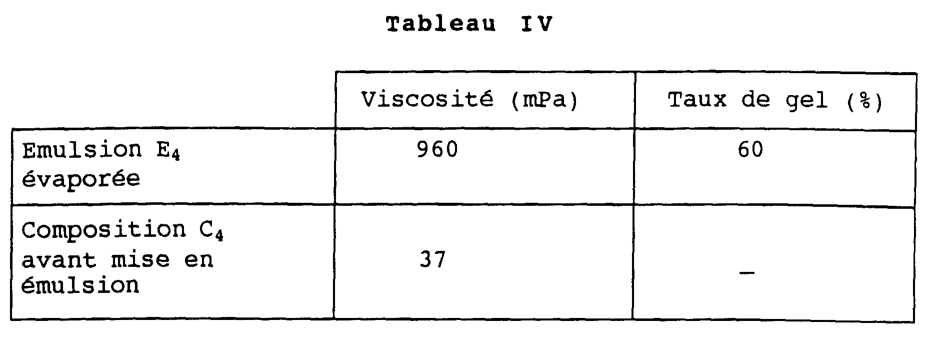

Les résultats du Tableau IV montrent, d'une part, que l'émulsion E₄ obtenue selon l'invention présente une viscosité beaucoup plus élevée que celle de la composition avant mise en émulsion et, d'autre part, que l'émulsion a bien la consistance d'un gel, en raison de la réticulation du polyéthylène.

## Revendications

1. Procédé de préparation d'une composition paraffine-polymère greffé, caractérisé en ce qu'il comprend les étapes suivantes :
a) la réalisation d'un mélange à partir :
* d'au moins une paraffine de point de fusion compris entre 50 et 120 °C,
* d'au moins un polymère présentant des chaînes hydrocarbonées à hydrogène mobile,
* d'au moins un composé organique du silicium pouvant se greffer sur ledit polymère grâce à un initiateur de greffage, et
* d'un initiateur de greffage ;
ce mélange étant effectué à une température telle que la paraffine soit à l'état fondu, et de façon à obtenir un polymère greffé ;
b) la réalisation d'une émulsion aqueuse du mélange obtenu en a), à une température telle que le mélange réalisé en a) reste à l'état fondu, de façon à faire réticuler le polymère greffé au sein de l'émulsion aqueuse;
c) la rupture de l'émulsion obtenue en b).

2. Procédé selon la revendication 1, caractérisé en ce que la phase de mélange comprend les étapes suivantes :
a) la réalisation d'un mélange paraffine/polymère à l'état fondu ;
b) l'incorporation dans ce mélange paraffine/polymère du composé organique du silicium et de l'initiateur de greffage du polymère ;
c) le maintien du mélange obtenu en b) à l'état fondu, sous agitation, pendant une durée suffisante pour obtenir le greffage sur le polymère du composé organique de silicium formé en a).

3. Procédé selon l'une des revendications 1 et 2, caractérisé en ce que la phase de réalisation d'une émulsion aqueuse comprend les étapes suivantes :
a) l'incorporation sous agitation d'agents émulsifiants dans le mélange à mettre en émulsion,
b) l'incorporation sous agitation au mélange ainsi obtenu d'eau ou d'une solution aqueuse à une température suffisante pour maintenir le mélange à l'état fondu.

4. Procédé selon l'une des revendications 1 à 3, caractérisé en ce que le mélange de paraffine et de polymère est effectué à une température comprise entre 50 et 210°C.

5. Procédé selon l'une des revendications 1 à 4, caractérisé en ce que le mélange de paraffine et de polymère est effectué pendant une durée comprise entre 1 et 3 heures.

6. Procédé selon l'une des revendications 1 à 5, caractérisé en ce que la phase de réalisation d'une émulsion aqueuse conduit à une émulsion comprenant :
a) de 5 à 60 % en poids de paraffine ;
b) de 0,5 à 10 % en poids de polymère greffé et réticulé, ce polymère pouvant contenir jusqu'à 8 % en poids de composé organique du silicium ;
c) de 40 à 95 % en poids d'eau ;
d) de 1 à 10 % en poids d'agent émulsifiant.

7. Procédé selon l'une des revendications 1 à 6, caractérisé en ce que la phase de rupture de l'émulsion s'effectue par évaporation de l'eau contenue dans l'émulsion.

8. Procédé selon l'une des revendications 1 à 7, caractérisé en ce que la paraffine possède un nombre d'atome de carbone compris entre 20 et 100 et un poids moléculaire compris entre 250 et 1 500.

9. Procédé selon l'une des revendications 1 à 8, caractérisé en ce que le polymère sur lequel est greffé un composé organique de silicium est choisi dans le groupe constitué par :
a) les polyoléfines ou les copolymères d'oléfines,
b) les élastomères synthétiques comme :
. l'EPDM (éthylène-propylène-diène-monomère),
. l'EPM (éthylène-propylène-monomère),
. le polyisobutylène (caoutchouc butyle),
. le polybutadiène,
. le polyisoprène,
. le polynorbornène,
c) le copolymère éthylène-acétate de vinyle.

10. Procédé selon l'une des revendications 1 à 9, caractérisé en ce que le composé organique du silicium est un silane choisi dans le groupe constitué par les chlorosilanes tels que le trichlorosilane, les organochlorosilanes, tels le vynil-trichlorosilane, le méthyltrichlorosilane, le méthyldichlorosilane, le diméthyldichlorosilane et le méthylvinyldichlorosilane, les esters d'organosilane, tels le vinyltriméthoxysilane, le vinyltriéthoxysilane, le vinyl-tris (2-méthoxyéthoxy) silane, le vinyltriacétoxysilane, et les mercaptosilanes.

11. Procédé selon l'une des revendications 1 à 10, caractérisé en ce que le polymère possède une masse moléculaire en poids supérieure à 10 000.

12. Procédé selon l'une des revendications 1 à 11, caractérisé en ce que le polymère est un polyéthylène.

13. Procédé selon l'une des revendications 1 à 11, caractérisée en ce que le polymère est un polynorbornène.

14. Procédé selon l'une des revendications 1 à 13, caractérisé en ce que l'initiateur de greffage du polymère sur le composé organique du silicium est un peroxyde.

15. Procédé selon l'une des revendications 1 à 14, caractérisé en ce que le peroxyde est de 1,1-bis(t-butyl)3,3,5-triméthyl-cyclohexane.

16. Procédé selon l'une des revendications 1 à 15, caractérisé en ce que l'agent émulsifiant est un mélange de monostéarate de sorbitan et d'alcools céto-stéaryliques éthoxylés.

17. Application du procédé selon l'une des revendications 1 à 16 à la préparation de compositions paraffine/polymère destinées à la réalisation de revêtement de support, à l'enduction de papier ou de carton, à la fabrication de bougies, au remplissage de fibres optiques, au trempage, à la microencapsulation et aux tampons thermiques.

## Patentansprüche

1. Verfahren zur Aufbereitung einer Masse aus Paraffin-Propfpolymer, gekennzeichnet durch die folgenden Schritte:
a) Herstellung eines Gemisches aus:
* mindestens einem Paraffin mit einem Schmelzpunkt zwischen 50 und 120°C,
* mindestens einem Polymer mit Kohlenwasserstoffketten mit beweglichem Wasserstoff,
* mindestens einer organischen Siliziumverbindung, die durch einen Propfkatalysator eine Propfung auf dem Polymer gestattet, und
* einem Pfropfkatalysator,
wobei diese Vermischung bei einer Temperatur erfolgt, bei der sich das Paraffin im geschmolzenen Zustand befindet, und ein Propfpolymer entsteht.
b) Herstellung einer wässerigen Emulsion des gemäß a) hergestellten Gemisches bei einer Temperatur, bei der das Gemisch gemäß a) seinen geschmolzenen Zustand behält, damit das Propfpolymer innerhalb der wässerigen Emulsion vernetzt wird.
c) Destabilisierung der gemäß b) erhaltenen Emulsion.

2. Verfahren nach Anspruch 1, dadurch gekennzeichnet, daß die Vermischungsphase die folgenden Schritte umfaßt:
a) Herstellung eines Gemisches aus Paraffin/Polymer im geschmolzenen Zustand;
b) Einarbeitung der organischen Siliziumverbindung und des Propfkatalysators für das Polymer in dieses Gemisch aus Paraffin/Polymer;
c) unter Umrühren Erhaltung des geschmolzenen Zustands des Gemisches gemäß b) auf eine so ausreichende Dauer, daß die Propfung der gemäß a) hergestellten organischen Siliziumverbindung auf dem Polymer erreicht wird.

3. Verfahren nach einem der Ansprüche 1 und 2, dadurch gekennzeichnet, daß die Phase der Herstellung einer wässerigen Emulsion die folgenden Schritte umfaßt:
a) unter Umrühren Einarbeitung von Emulgierungsmitteln in das zu einer Emulsion zu verarbeitende Gemisch,
b) unter Umrühren Zugabe von Wasser oder einer wässerigen Lösung zu dem so erhaltenen Gemisch mit einer ausreichenden Temperatur, um den geschmolzenen Zustand des Gemisches zu erhalten.

4. Verfahren nach irgendeinem der Ansprüche 1 bis 3, dadurch gekennzeichnet, daß das Gemisch aus Paraffin und Polymer bei einer zwischen 50 und 210°C liegenden Temperatur hergestellt wird.

5. Verfahren nach irgendeinem der Ansprüche 1 bis 4, dadurch gekennzeichnet, daß für die Herstellung des Gemisches aus Paraffin und Polymer der Zeitaufwand zwischen 1 und 3 Stunden beträgt.

6. Verfahren nach irgendeinem der Ansprüche 1 bis 5, dadurch gekennzeichnet, daß die Phase der Herstellung einer wässerigen Emulsion zu einer Emulsion führt, die folgende Bestandteile umfaßt:
a) zwischen 5 und 60 Gew.-% Paraffin;
b) zwischen 0.5 und 10 Gew.-% gepfropftes und vernetztes Polymer, wobei dieses Polymer bis zu 8 Gew.-% an organischer Siliziumverbindung enthalten kann;
c) zwischen 40 und 95 Gew.-% Wasser;
d) zwischen 1 und 10 Gew.-% Emulgierungsmittel.

7. Verfahren nach irgendeinem der Ansprüche 1 bis 6, dadurch gekennzeichnet, daß die Phase der Demulgierung durch Verdunsten des in der Emulsion enthaltenen Wassers abläuft.

8. Verfahren nach irgendeinem der Ansprüche 1 bis 7, dadurch gekennzeichnet, daß das Paraffin zwischen 20 und 100 Kohlenstoffatome umfaßt und ein Molekulargewicht von 250 bis 1500 hat.

9. Verfahren nach irgendeinem der Ansprüche 1 bis 8, dadurch gekennzeichnet, das das Polymer, das mit einer organischen Siliziumverbindung gepropft wird, aus der Gruppe gewählt wird, die besteht aus:
a) den Polyolefinen oder den Olefincopolymeren,
b) den synthetischen Elastomeren wie zum Beispiel:
. EPDM (Ethylen-Propylen-Dien-Monomer),
. EPM (Ethylen-Propylen-Monomer),
. Polyisobutylen (Butylkautschuk),
. Polybutadien,
. Polyisopren,
. Polynorbornen,
c) Ethylen-Vinylacetet-Copolymer.

10. Verfahren nach irgendeinem der Ansprüche 1 bis 9, dadurch gekennzeichnet, daß es sich bei der organischen Siliziumverbindung um ein Silan aus der Gruppe der Chlorsilane wie zum Beispiel Trichlorsilan, der Organochlorsilane wie beispielsweise Vinyltrichlorsilan, Methyltrichlorsilan, Methyldichlorsilan, Dimethyldichlorsilan und Methylvinyldichlorsilan, der Organosilanester wie zum Beispiel Vinyltrimethoxysilan, Vinyltriethoxysilan, Vinyl-tris (2-methoxyethoxy)-Silan, Vinyltriacetoxysilan und der Mercaptosilane handelt.

11. Verfahren nach irgendeinem der Ansprüche 1 bis 10, dadurch gekennzeichnet, daß das Polymer eine Molekularmasse mit einem Gewicht von mehr als 10.000 enthält.

12. Verfahren nach irgendeinem der Ansprüche 1 bis 11, dadurch gekennzeichnet, daß es sich bei dem Polymer um ein Polyethylen handelt.

13. Verfahren nach irgendeinem der Ansprüche 1 bis 11, dadurch gekennzeichnet, daß das Polymer ein Polynorbornen ist.

14. Verfahren nach irgendeinem der Ansprüche 1 bis 13, dadurch gekennzeichnet, daß der Katalysator zum Propfen des Polymers auf der organischen Siliziumverbindung ein Peroxid ist.

15. Verfahren nach irgendeinem der Ansprüche 1 bis 14, dadurch gekennzeichnet, daß es sich bei dem Peroxid um 1,1-bis(t-butyl)3,3,5-Trimethyl-Cyclohexan handelt.

16. Verfahren nach irgendeinem der Ansprüche 1 bis 15, dadurch gekennzeichnet, daß das Emulgierungsmittel ein Gemisch aus Sorbitanmonostearat und Ketostearyl-Ethoyxylalkoholen ist.

17. Anwendung des Verfahrens nach irgendeinem der Ansprüche 1 bis 16 zur Aufbereitung von Paraffin-/Polymerzusammensetzungen zum Aufbringen auf ein Trägermaterial, zum Beschichten von Papier oder Karton, zur Herstellung von Kerzen, zum Füllen von Glasfasern, zur Tauchbeschichtung, zur Mikroverkapselung und für Wärmekissen.

## Claims

1. A process for the preparation of a graft polymer/paraffin composition, characterised in that it comprises the following stages:
a) the formation of a mixture based on:
* at least one paraffin, the melting point of which is between 50 and 120°C,
* at least one polymer having hydrocarbon chains with mobile hydrogen,
* at least one organic compound of silicon which can be grafted on to said polymer by means of a grafting initiator, and
* a grafting initiator;
said mixing being carried out at a temperature such that the paraffin is in the molten state and so as to obtain a graft polymer;
b) the formation of an aqueous emulsion of the mixture obtained in a), at a temperature such that the mixture formed in a) remains in the molten state, so as to induce cross-linking of the graft polymer in the aqueous emulsion;
c) the breaking of the emulsion obtained in b).

2. A process according to claim 1, characterised in that the mixing stage comprises the following steps:
a) the formation of a polymer/paraffin mixture in the molten state;
b) incorporating into this polymer/paraffin mixture the organic compound of silicon and the grafting initiator of the polymer;
c) maintaining the mixture obtained at b) in the molten state, under agitation, for a time which is sufficient to ensure the grafting on to the polymer of the organic compound of silicon formed in a).

3. A process according to either of claims 1 and 2, characterised in that the stage of forming an aqueous emulsion comprises the following steps:
a) incorporating, under agitation, emulsifiers into the mixture which is to form an emulsion,
b) incorporating, under agitation, in the resultant mixture water or an aqueous solution at a temperature which is sufficient to maintain the mixture in the molten state.

4. A process according to any one of claims 1 to 3, characterised in that the mixing of paraffin and polymer is carried out at a temperature of between 50 and 210°C.

5. A process according to any one of claims 1 to 4, characterised in that the mixing of paraffin and polymer is carried out over a period of between 1 and 3 hours.

6. A process according to any one of claims 1 to 5, characterised in that the stage of forming an aqueous emulsion results in an emulsion comprising:
a) 5 to 60 % by weight of paraffin;
b) 0.5 to 10 % by weight of cross-linked graft polymer, it being possible for said polymer to contain up to 8 % by weight of organic compound of silicon;
c) 40 to 95 % by weight of water;
d) 1 to 10 % by weight of emulsifier.

7. A process according to any one of claims 1 to 6, characterised in that the stage of breaking the emulsion is effected by evaporation of the water contained in the emulsion.

8. A process according to any one of claims 1 to 7, characterised in that the paraffin has an atomic carbon number of between 20 and 100 and a molecular weight of between 250 and 1,500.

9. A process according to any one of claims 1 to 8, characterised in that the polymer on to which is grafted an organic compound of silicon is chosen from the group comprising:
a) the polyolefins or the copolymers of olefins,
b) the synthetic elastomers, such as:
. EPDM (ethylene-propylene-diene-monomer),
. EPM (ethylene-propylene-monomer),
. polyisobutylene (butyl rubber),
. polybutadiene,
. polyisoprene,
. polynorbornene,
c) ethylene-vinyl acetate copolymer.

10. A process according to any one of claims 1 to 9, characterised in that the organic compound of silicon is a silane chosen from the group comprising the chlorosilanes, such as trichlorosilane, the organochlorosilanes, such as vinyl trichlorosilane, methyl trichlorosilane, methyl dichlorosilane, dimethyl dichlorosilane and methylvinyl dichlorosilane, the organosilane esters, such as vinyl trimethoxy silane, vinyl triethoxy silane, vinyl-tris (2-methoxyethoxy) silane, vinyl triacetoxy silane, and the mercapto silanes.

11. A process according to any one of claims 1 to 10, characterised in that the polymer has a molecular mass by weight higher than 10,000.

12. A process according to any one of claims 1 to 11, characterised in that the polymer is a polyethylene.

13. A process according to any one of claims 1 to 11, characterised in that the polymer is a polynorbornene.

14. A process according to any one of claims 1 to 13, characterised in that the grafting initiator of the polymer on the organic compound of silicon is a peroxide.

15. A process according to any one of claims 1 to 14, characterised in that the peroxide is 1,1-bis(t-butyl)3,3,5-trimethyl-cyclohexane.

16. A process according to any one of claims 1 to 15, characterised in that the emulsifier is a mixture of sorbitan monostearate and ethoxylated keto-stearyl alcohols.

17. Application of the process according to any one of claims 1 to 16 to the preparation of polymer/paraffin compositions intended for the formation of a support covering, for coating paper or cardboard, for the manufacture of candles, for filling optical fibres, for immersion coating, for microencapsulation and for thermal buffers.
